# FASCICULE DE BREVET EUROPEEN

(11) **EP 0 829 650 B1**
(45) Date de publication et mention de la délivrance du brevet: **07.03.2001**
(21) Numéro de dépôt: 97402094.3
(22) Date de dépôt: 05.09.1997
(51) Int. Cl.: F16B 5/00, F16B 2/22, F21V 21/02

(54) **Blocs à rapporter l'un sur l'autre, en particulier bloc autonome d'éclairage de sécurité à embrocher sur une patère**
Befestigungsvorrichtung für Blöcke, insbesondere zur Befestigung eines autonomen Notbeleuchtungsblockes auf einem Träger
Fastening device for blocks, in particular for fastening an autonomous emergency-lighting block on a bracket

(30) Priorité: 12.09.1996 FR 9611121
(43) Date de publication de la demande: 18.03.1998
(73) Titulaire: LEGRAND, F-87000 Limoges (FR); LEGRAND SNC, F-87000 Limoges (FR)
(72) Inventeur: Goudal, Jean-Paul, 87000 Limoges (FR); Pourieux, Nicolas, 87270 Couzeix (FR)
(74) Mandataire: CABINET BONNET-THIRION

(56) Documents cités:
- EP-A- 0 384 650
- DE-A- 3 929 768
- FR-A- 2 590 104

## Description

La présente invention concerne d'une manière générale tout bloc qui est à rapporter sur un autre.

Elle vise plus particulièrement le cas des blocs qui, pour leur fixation à un quelconque support, et par exemple à un mur, sont à rapporter sur un autre bloc déjà dûment fixé à celui-ci.

Cela est le cas, notamment, de certains blocs électriques, et, par exemple, de blocs autonomes d'éclairage de sécurité, qui, aussi bien pour leur fixation mécanique que pour leur desserte électrique, sont à embrocher sur une patère.

La présente invention vise plus précisément à un boîtier à deux blocs à rapporter l'un sur l'autre conformes au préambule de la revendication 1, comme connu par le document EP 0 384 650. Dans cette réalisation, la griffe est montée sur l'embase, c'est-à-dire le bloc fixe, du boîtier et les moyens d'articulation de la griffe sont en réalité constitués par des bras élastiquement déformables venus de matière avec la griffe et l'embase du bolier et constituent aussi les moyens élastiques précités. Il en résulte une relative fragilité et imprécision du montage de la griffe.

Dans certains blocs autonomes d'éclairage de sécurité, deux griffes sont ainsi prévues, et il s'agit, en pratique, de pièces métalliques qui interviennent en sus de moyens d'encliquetage, et qui, portées par la patère, sont montées mobiles en translation sur celle-ci.

Cette disposition a donné et peut encore donner satisfaction.

Mais elle présente des inconvénients, qui sont les suivants.

Tout d'abord, les griffes sont en pratique montées mobiles entre deux positions stables, l'une de verrouillage, pour laquelle elles solidarisent le bloc autonome d'éclairage de sécurité à la patère, l'autre de libération, pour laquelle elles libèrent ce bloc autonome d'éclairage de sécurité.

Par suite, si, lors de l'embrochage d'un tel bloc autonome d'éclairage de sécurité sur la patère, ces deux griffes ne sont pas correctement en position de libération, il est impossible de procéder à un tel embrochage.

En outre, et surtout, une fois le bloc autonome d'éclairage de sécurité embroché sur la patère, il faut intervenir sur les griffes pour les faire passer de leur position de libération à leur position de verrouillage, ce qui nécessite une opération manuelle supplémentaire, alors même que, par mesure de précaution, il est préférable de retenir par ailleurs d'une main le bloc autonome d'éclairage de sécurité pour éviter qu'il n'échappe à la patère avant son verrouillage sur celle-ci.

La présente invention a d'une manière générale pour objet une disposition permettant d'éviter ces inconvénients décrits ci-dessus.

De manière plus précise, elle a pour objet des blocs du type précité qui se caractérisent par les dispositions de la partie caractérisante de la revendication 1.

Quoi qu'il en soit, grâce à la, ou aux griffes suivant l'invention, le bloc mobile se verrouille automatiquement de lui-même sur le bloc fixe au terme de son embrochage sur celui-ci, sans qu'il soit besoin d'une quelconque intervention sur ces griffes.

Une telle intervention n'est en pratique nécessaire qu'au débrochage du bloc mobile vis-à-vis du bloc fixe, c'est-à-direà la dépose de ce bloc mobile.

En outre, à l'embrochage, les griffes suivant l'invention assurent avantageusement par elles-mêmes tant le verrouillage du bloc mobile sur le bloc fixe que son encliquetage sur celui-ci, sans donc qu'il soit nécessaire de prévoir par ailleurs d'autres moyens d'encliquetage.

Par ailleurs, du fait de leur montage rotatif, leur fonctionnement est avantageusement franc et sûr.

Enfin, lorsque le bloc mobile définit avec le bloc fixe une zone étanche, et cela est le cas par exemple pour un bloc autonome d'éclairage de sécurité à embrocher sur une patère, les griffes suivant l'invention peuvent avantageusement s'étendre à l'extérieur de cette zone étanche, sans, donc, nuire à l'efficacité de celle-ci.

Préférentiellement, deux griffes sont prévues, par exemple en positions diagonalement opposées l'une par rapport à l'autre.

Les caractéristiques et avantages de l'invention ressortiront d'ailleurs de la description qui va suivre, à titre d'exemple, en référence aux dessins schématiques annexés sur lesquels :
la figure 1 est une vue en perspective des deux blocs suivant l'invention, dûment rapportés l'un sur l'autre et vus de l'avant ;
la figure 2, qui est déduite de la figure 1, en est une vue en perspective éclatée ;
la figure 3 reprend, à échelle supérieure, le détail de la figure 2, qui, repéré par un encart III sur cette figure 2, se rapporte au bloc mobile;
la figure 4 est, à échelle encore supérieure, une vue partielle en coupe transversale de ce bloc mobile, suivant la ligne IV-IV des figures 2 et 3 ;
la figure 5 est une vue partielle en perspective de ce bloc mobile, vu de l'arrière, suivant la flèche V de la figure 4, avec, de manière éclatée, l'une des griffes qui l'équipent.
La figure 6 reprend, à échelle supérieure, le détail de la figure 2 qui, repéré par un encart VI sur cette figure 2, se rapporte au bloc fixe ;
la figure 7 est, à l'échelle de la figure 4, une vue partielle en coupe transversale de ce bloc fixe, suivant la ligne VII-VII des figures 2 et 6 ;
la figure 8 est une vue en élévation latérale d'une griffe suivant l'invention, suivant la flèche VIII de la figure 5 ;
la figure 9 en est, à échelle supérieure, une vue en perspective ;
les figures 10A, 10B et 10C sont des vues partielles en coupe transversale, qui, déduites de celles des figures 4 et 7, illustrent diverses phases successives de l'embrochage du bloc mobile sur le bloc fixe ;
la figure 10D est une vue partielle en coupe transversale qui, analogue à celle des figures 10A, 10B et 10C, se rapporte, elle, au débrochage de ce bloc mobile vis-à-vis de ce bloc fixe.

Ces figures illustrent, à titre d'exemple, l'application de l'invention au cas où le bloc mobile 10 à rapporter sur un bloc fixe 11 est un bloc autonome d'éclairage de sécurité, et le cas où, conjointement, le bloc fixe 11 qui lui est ainsi associé est une patère, sur laquelle le bloc autonome d'éclairage de sécurité doit être embroché, et qui est propre, d'une part, à assurer la fixation mécanique de ce bloc autonome d'éclairage de sécurité à un quelconque support, par exemple un mur, non représenté, et, d'autre part, à assurer sa desserte électrique.

Un tel bloc mobile 10 et un tel bloc fixe 11 étant bien connus par eux-mêmes, et ne relevant pas en propre de la présente invention, ils ne seront pas décrits dans tous leurs détails ici.

Seuls en seront décrits les éléments nécessaires à la compréhension de l'invention.

Il suffira d'indiquer, à ce sujet, que le bloc fixe 11 comporte une platine 12, par laquelle il est adapté à être rapporté sur le support concerné, et, en saillie sur cette platine 12, un bossage 13, qui, dans la forme de réalisation représentée, est globalement parallélépipédique.

Ce bossage 13 n'intervient, ici, que par son contour.

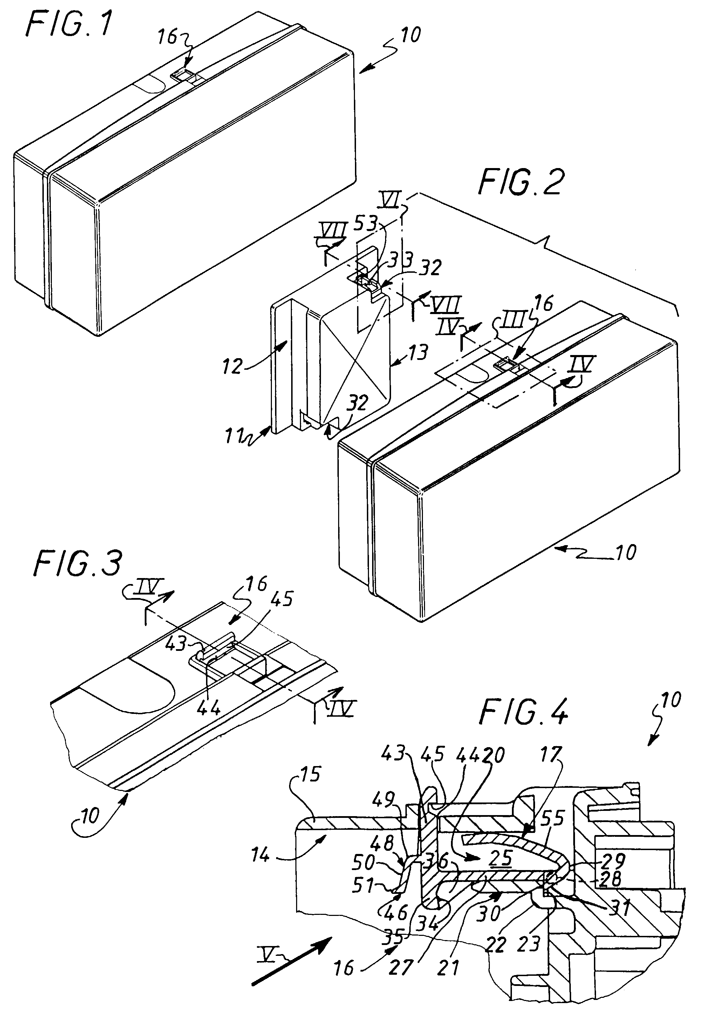

C'est pourquoi, les composants qu'il porte en façade ont été systématiquement occultés par des traits en X sur la figure 2.

Corollairement, le bloc mobile 10 comporte, sur sa face arrière, une cavité 14, qui est, au moins en partie, complémentaire du bossage 13 du bloc fixe 11, et par laquelle il est ainsi adapté à être engagé sur ce bossage 13, en recouvrant celui-ci.

Dans la forme de réalisation représentée, le bloc mobile 10 est, lui aussi, globalement parallélépipédique, et, dans sa longueur, il a une emprise largement supérieure à celle du bossage 13 du bloc fixe 11.

Par contre, dans sa largeur, son emprise est sensiblement égale à celle de ce bossage 13 tout en étant légèrement supérieure à celle-ci, en sorte que, par deux parois 15 opposées, qui confinent, dans sa largeur, la cavité 14, et dont une seule est visible sur les figures, il recouvre localement au plus près ce bossage 13.

Dans la forme de réalisation représentée, enfin, la cavité 14 du bloc mobile 10 s'étend dans la zone médiane de celui-ci, sensiblement à mi-distance de ses extrémités.

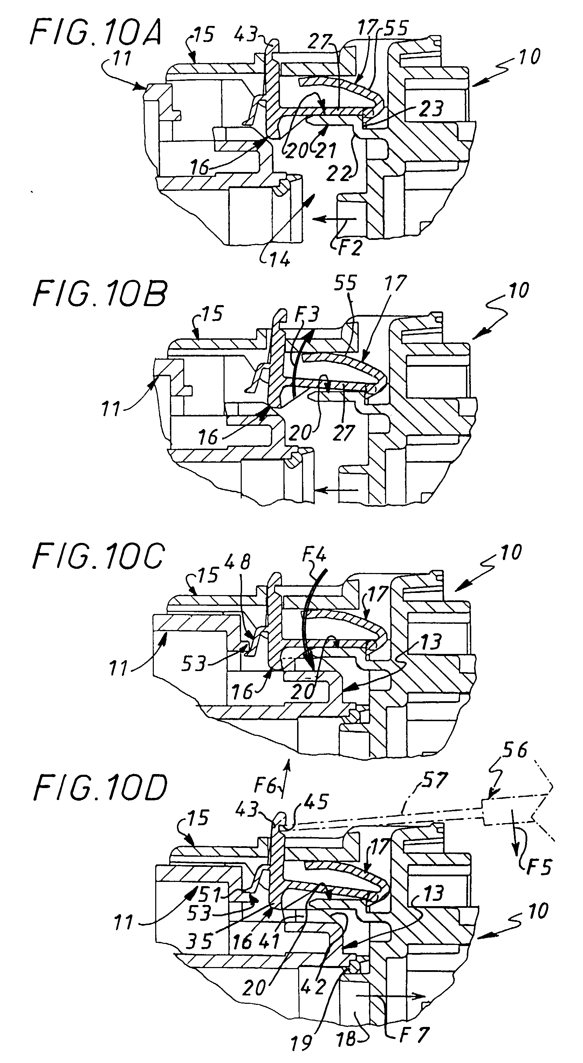

De manière connue en soi, il est prévu, pour le verrouillage débrayable du bloc mobile 10 sur le bloc fixe 11, au moins une griffe 16, qui, intervenant entre ce bloc mobile 10 et ce bloc fixe 11, est montée mobile entre deux positions, l'une de verrouillage, figure 10C, pour laquelle elle solidarise, de manière débrayable, le bloc mobile 10 au bloc fixe 11, l'autre de libération, figure 10D, pour laquelle elle libère au contraire ce bloc mobile 10 vis-à-vis du bloc fixe 11.

Suivant l'invention, c'est le bloc mobile 10, et, donc, en l'espèce, le bloc autonome d'éclairage de sécurité, qui porte cette griffe 16, et celle-ci, qui, suivant des conditions décrites plus en détail ultérieurement, est montée rotative, est soumise à des moyens élastiques 17, également décrits plus en détail ultérieurement, qui la sollicitent en permanence en direction d'une position de repos, figure 4, constituant en pratique sa position de verrouillage.

Préférentiellement, et c'est le cas dans la forme de réalisation représentée, la griffe 16 forme une pièce, qui, distincte du bloc mobile 10 qu'elle équipe, est dûment rapportée sur celui-ci.

Autrement dit, cette griffe 16 forme une pièce distincte tant du bloc mobile 10 que du bloc fixe 11.

Dans la forme de réalisation représentée, le bloc mobile 10 porte deux griffes 16.

Ces deux griffes 16, dont une seule est visible sur les figures, sont en positions diagonalement opposées l'une par rapport à l'autre, et elles interviennent sensiblement au fond de la cavité 14 du bloc mobile 10.

Plus précisément, lorsque, comme en l'espèce, et ainsi qu'il est mieux visible sur la figure 10D, le bloc mobile 10 et le bloc fixe 11 confinent, l'un avec l'autre, une zone étanche 18, qui, ceinturée par un joint d'étanchéité 19, est en retrait par rapport aux parois 15 du bloc mobile 10, les deux griffes 16 interviennent l'une et l'autre à l'extérieur de cette zone étanche 18, en étant chacune respectivement disposées entre celle-ci et l'une des parois 15 du bloc mobile 10.

Les deux griffes 16 étant identiques l'une à l'autre, seule l'une d'elles sera décrite dans ce qui suit.

Il en est de même en ce qui concerne les dispositions correspondantes relatives tant au bloc mobile 10 qu'au bloc fixe 11.

Pour chacune des griffes 16, le bloc mobile 10 comporte, dans la forme de réalisation représentée, une poche 20, qui est formée par deux parois parallèles, à savoir l'une des parois 15 et une paroi 21 parallèle à celle-ci, et dans laquelle est engagée cette griffe 16.

Par sa surface interne, la paroi 15 forme une surface d'appui pour les moyens élastiques 17 associés à la griffe 16.

Corollairement, la paroi 21, qui ne s'étend que sur une partie de la longueur de la paroi 15 à compter du fond de la cavité 14, forme, par sa surface interne, une surface de butée définissant la position de repos, et, donc, de verrouillage, de la griffe 16.

Pour des raisons qui apparaîtront ci-après, la paroi 21 s'étend en porte à faux à partir du fond de la cavité 14, et, à proximité de sa racine, elle présente, transversalement, sur sa surface interne, à la faveur d'un décrochement 22, un épaulement 23.

Pour le maintien transversal de la griffe 16, la poche 20 est délimitée latéralement par deux flasques 25, qui, en saillie sur la surface interne de la paroi 15, s'étendent sensiblement perpendiculairement à cette paroi 15, d'un seul tenant avec celle-ci, et qui, disposés chacun respectivement de part et d'autre de la paroi 21, ménagent chacun avec celle-ci une fente 26.

Dans la forme de réalisation représentée, la griffe 16 comporte un corps central 27, mince et plat, par lequel, en position de repos, elle porte sur la surface de butée définissant cette position de repos, c'est-à-dire sur la surface de butée que forme pour elle la paroi 21 de la poche 20.

Pour son montage rotatif, la griffe 16 présente, en saillie, latéralement, à l'extrémité de son corps central 27, des tourillons 28, par lesquels elle est en simple appui sur la tranche 29 des flasques 25 de la poche 20 dans laquelle elle est disposée.

Dans la forme de réalisation représentée, la griffe 16 présente, transversalement, un premier cran 30, par lequel elle est apte à coopérer en retenue avec l'épaulement 23 du bloc mobile 10.

Ce premier cran 30 s'étend sensiblement perpendiculairement au corps central 27, en faisant saillie sur la face de celui-ci opposée à celle sur laquelle interviennent les moyens élastiques 17, et il est précédé par un chanfrein oblique d'engagement 31.

Dans la forme de réalisation représentée, ce premier cran 30 de la griffe 16 est au voisinage de ses tourillons 28.

Il intervient donc à l'une des extrémités de son corps central 27, en pratique celle la plus interne dans la poche 20 du bloc mobile 10, et il est tourné vers l'autre des extrémités de ce corps central 27.

A la faveur d'un décrochement 32 que comporte son bossage 13 en correspondance avec la poche 20 du bloc mobile 10, le bloc fixe 11 présente lui aussi, transversalement, un épaulement 33, figures 1, 6 et 7, et la griffe 16 présente, elle-même, transversalement, un deuxième cran 34 par lequel elle est apte à coopérer en retenue avec cet épaulement 33.

Ce deuxième cran 34 intervient à l'autre des extrémités du corps central 27 de la griffe 16, en pratique celle la plus externe dans la poche 20 du bloc mobile 10, et il est tourné vers la première de ces extrémités.

Les deux crans 30, 34 de la griffe 16 sont donc tournés l'un vers l'autre.

Alors que le premier cran 30 est droit, le deuxième cran 34 s'étend légèrement en oblique par rapport au corps central 27.

Dans la forme de réalisation représentée, le deuxième cran 34 de la griffe 16 est formé sur un bras de verrouillage 35 qui fait saillie transversalement sur cette griffe 16, en s'étendant sensiblement en équerre avec son corps central 27.

En outre, dans cette forme de réalisation, ce bras de verrouillage 35 est relié au corps central 27 par une nervure de rigidification 36 qui s'étend en triangle dans sa partie médiane.

En conséquence, l'épaulement 33 du bloc fixe 11 est interrompu localement, dans sa zone médiane, par une encoche 38 propre au passage de cette nervure de rigidification 36.

Dans la forme de réalisation représentée, le décrochement 32 du bossage 13 du bloc fixe 11 dans lequel intervient cet épaulement 33 affecte une arête de ce bossage 13.

En pratique, l'épaulement 33 est formé par une nervure 39, qui, en saillie sur une embase 40 présente dans ce décrochement 32, est attelée à une nervure de rigidification 41 à chacune de ses extrémités.

Les nervures de rigidification 41 qui s'étendent ainsi de part et d'autre de l'épaulement 33 sont dirigées vers l'avant, c'est-à-dire vers le bloc mobile 10, et elles forment chacune un chanfrein oblique d'engagement 42 à leur extrémité.

Suivant une inclinaison complémentaire de celle du deuxième cran 34 de la griffe 16, l'épaulement 33 du bloc fixe 11 s'étend légèrement en oblique par rapport à l'embase 40 qui le porte.

Dans la forme de réalisation représentée, la griffe 16 présente, en outre, transversalement, en saillie, un bras de déverrouillage 43 accessible de l'extérieur du bloc mobile 10 à la faveur d'un évidement 44 de celui-ci.

Préférentiellement, et tel que représenté, ce bras de déverrouillage 43 fait plus précisément en permanence saillie à l'extérieur même du bloc mobile 10 à la faveur de l'évidement 44 de celui-ci.

Le bras de verrouillage 35 de la griffe 16 et son bras de déverrouillage 43 s'étendent en pratique dos à dos de part et d'autre de cette griffe 16, et, plus précisément, de part et d'autre de son corps central 27, à l'extrémité de celui-ci opposée aux tourillons 28, et ils sont sensiblement alignés l'un avec l'autre.

Ainsi, ce bras de déverrouillage 43 intervient très exactement au droit du deuxième cran 34 de la griffe 16, celui par lequel elle est apte à se crocheter sur le bloc fixe 11.

Pour faciliter sa préhension, le bras de déverrouillage 43 de la griffe 16 présente une saignée 45 au voisinage de son extrémité libre.

Préférentiellement, et tel que représenté, cette saignée 45 affecte celle de ses faces qui est tournée du côté du corps central 27, et, donc, du bloc mobile 10.

Dans la forme de réalisation représentée, l'évidement 44 que présente le bloc mobile 10 se réduit à une simple boutonnière affectant localement sa paroi 15 au débouché de la poche 20.

Dans la forme de réalisation représentée, la griffe 16 présente, pour sa retenue en position de libération, un talon d'appui 46 apte à coopérer en appui avec un épaulement d'appui 47 prévu à cet effet sur le bloc fixe 11.

En pratique, ce talon d'appui 46 est formé en bout d'un jambage 48 qui, solidaire du bras de déverrouillage 43, en faisant saillie sur la face de celui-ci tournée du côté opposé au corps central 27, est élastiquement déformable et présente, successivement, à compter de ce bras de déverrouillage 43, un tronçon droit 49, qui s'étend sensiblement perpendiculairement à ce bras de déverrouillage 43, et un tronçon oblique 50, qui s'étend, lui, sensiblement en biais par rapport à celui-ci, et au bout duquel intervient le talon d'appui 46.

Plus précisément, dans la forme de réalisation représentée, le talon d'appui 46 forme la surface inférieure d'un pied 51, qui est en saillie sur le jambage 48, et par lequel celui-ci peut se crocheter sur un épaulement de retenue 52 prévu à cet effet sur le bloc fixe 11.

Dans la forme de réalisation représentée, l'épaulement d'appui 47 du bloc fixe 11 et son épaulement de retenue 52 sont chacun respectivement formés par les faces supérieure et inférieure d'une nervure 53 présente en saillie sur une paroi 54 de ce bloc fixe 11 distante de l'embase 40 portant la nervure 39 formant l'épaulement 33.

Enfin, dans la forme de réalisation représentée, les moyens élastiques 17 associés à la griffe 16 sont formés par une languette 55 qui, d'un seul tenant avec cette griffe 16, forme un U avec celle-ci, et, plus précisément, avec son corps central 27.

Plus précisément, encore, dans cette forme de réalisation, cette languette 55 est issue de l'extrémité du corps central 27 où interviennent les tourillons 28 et le premier cran 30, c'est-à-dire de son extrémité la plus interne dans la poche 20 du bloc mobile 10, et, en rebroussement par rapport à ce corps central 27, en se raccordant en continu avec le chanfrein oblique d'engagement 31 précédant le premier cran 30, elle s'étend en direction du bras de déverrouillage 43, en portant par sa surface externe sur la surface interne de la paroi 15 du bloc mobile 10.

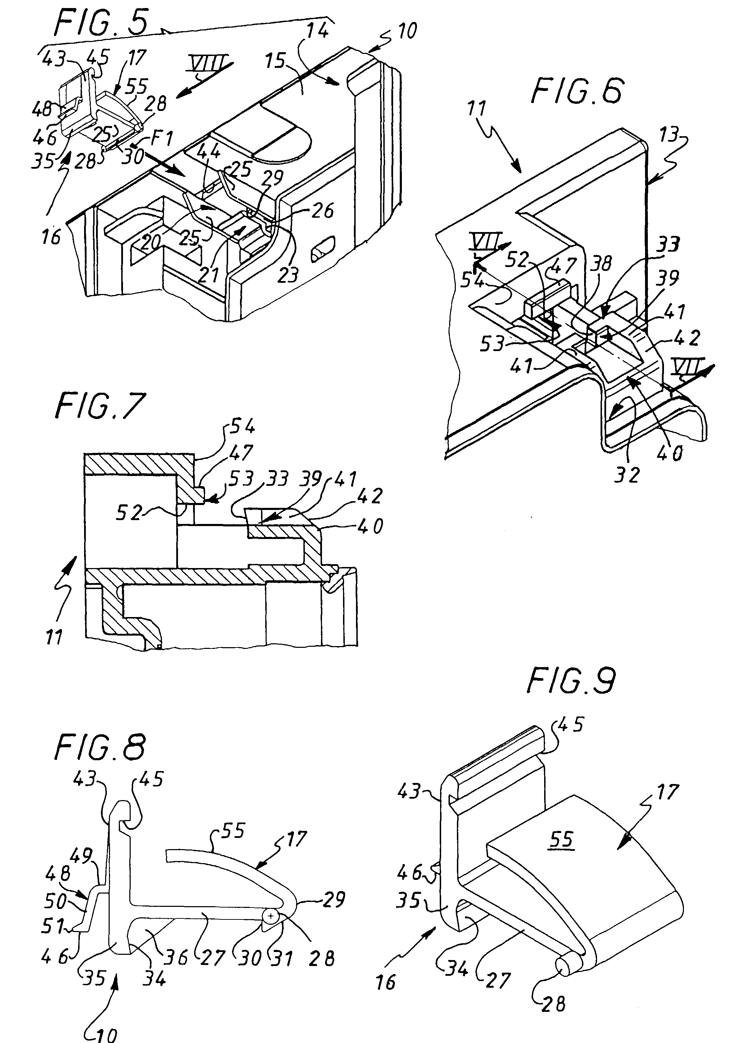

Au montage, et tel que schématisé par la flèche F1 sur la figure 5, la griffe 16 est engagée à force dans la poche 20 du bloc mobile 10, jusqu'à ce que, arrivant au droit de l'évidement 44 de ce bloc mobile 10, son bras de déverrouillage 43 puisse traverser la paroi 15 de celui-ci à la faveur de cet évidement 44.

Au cours de cet engagement, les tourillons 28 de la griffe 16 suivent les fentes 26 prévues entre la tranche 29 des flasques 25 et la paroi 21, jusqu'à ce que le premier cran 30 de cette griffe 16 vienne se crocheter sur l'épaulement 23 de cette paroi 21, et, donc, du bloc mobile 10, comme représenté sur les figures 4 et 10A.

Pour la position de repos, et de verrouillage, ainsi atteinte par la griffe 16, le bras de déverrouillage 43 de cette griffe 16 ne fait que légèrement saillie sur la paroi 15 du bloc mobile 10, sa saillie n'étant en pratique que juste suffisante pour que sa saignée 45 soit accessible.

A l'embrochage, le bloc mobile 10 ainsi équipé de deux griffes 16 est engagé sur le bossage 13 du bloc fixe 11, suivant la flèche F2 de la figure 10A.

Au cours de cet engagement, le bras de verrouillage 35 de ces griffes 16 vient au contact des chanfreins obliques d'engagement 42 qui, présents sur l'embase 40 que comporte le bloc fixe 11, précèdent l'épaulement 33 de celui-ci.

Du fait de l'appui de leurs tourillons 28 sur la tranche 29 des flasques 25 de la poche 20 du bloc mobile 10 dans laquelle elles sont disposées, les griffes 16 sont alors chacune l'objet d'un mouvement de pivotement autour de ces tourillons 28, suivant la flèche F3 de la figure 10B, à l'encontre de la languette 55 constituant les moyens élastiques 17 qui leur sont associés.

Lorsque, guidé par les rainures de rigidification 41 du bloc fixe 11, le bras de verrouillage 35 des griffes 16 arrive au droit de la nervure 39 de ce bloc fixe 11 et dépasse celle-ci, les griffes 16, sous la sollicitation de la languette 55 constituant les moyens élastiques 17, sont l'objet d'un mouvement de pivotement inverse du précédent, suivant la flèche F4 de la figure 10B, et, par leur deuxième cran 34, elles viennent alors se crocheter sur l'épaulement 33 du bloc fixe 11.

Ainsi revenues en position de verrouillage, les griffes 16 assurent alors conjointement, d'une part, l'encliquetage du bloc mobile 10 sur le bloc fixe 11, et, d'autre part, son verrouillage mécanique sur celui-ci.

Corollairement, leur jambage 48 se trouve crocheté par son pied 51 sur l'épaulement de retenue 52 que forme la nervure 53 correspondante du bloc fixe 11, ce qui, avec la languette 55 constituant les moyens élastiques 17, conforte leur maintien en position de verrouillage.

Ainsi, l'engagement du bloc mobile 10 sur le bloc fixe 11, et son verrouillage sur celui-ci, peuvent avantageusement être assurés d'une seule main, sans une quelconque intervention sur les griffes 16.

Au débrochage, c'est-à-dire à la dépose du bloc mobile 10 vis-à-vis du bloc fixe 11, une intervention sur les griffes 16 est par contre nécessaire, pour les faire passer de leur position de verrouillage à leur position de libération.

Si désiré, cette intervention peut être facilitée par un quelconque outil, et, par exemple, tel que schématisé en traits interrompus sur la figure 10D, par un tournevis 56, dont la lame 57, insérée, tour à tour, dans la saignée 45 du bras de déverrouillage 43 de l'une et de l'autre des griffes 16, permet, en prenant appui sur le bloc fixe 11, de faire levier, suivant la flèche F5 de la figure 10D, et, ainsi, d'exercer sur ce bras de déverrouillage 43, suivant la flèche F6 de la figure 10D, une traction suffisante pour que, le jambage 48 s'effaçant élastiquement, le pied 51 franchisse la nervure 53 du bloc fixe 11, et, par retour du jambage 48 à sa configuration initiale, vienne ensuite prendre appui sur l'épaulement d'appui 47 prévu à cet effet sur cette nervure 53.

Pour la position de libération qui est alors celle des griffes 16, le bras de verrouillage 35 de celles-ci échappe à l'épaulement 33 du bloc fixe 11.

Les griffes 16 étant maintenues dans cette position de libération par leur jambage 48, il suffit, ensuite, de dégager le bloc mobile 10 du bossage 13 du bloc fixe 11, suivant la flèche F7 de la figure 10D.

Au cours de ce dégagement, les griffes 16 sont maintenues en position de libération, d'abord par le pied 51 de leur jambage 48 qui porte sur la nervure 53 du bloc fixe 11, puis par leur bras de verrouillage 35, celui-ci venant à coulisser le long des nervures de rigidification 41 de ce bloc fixe 11 lorsque le pied 51 abandonne la nervure 53 précédente.

Lorsque, ce dégagement étant pour l'essentiel effectué, le bras de verrouillage 35 des griffes 16 arrive au droit des chanfreins obliques d'engagement 42 présents au bout des nervures de rigidification 41 du bloc fixe 11, les griffes 16 reviennent d'elles-mêmes à leur position de repos, et donc de verrouillage, sous la sollicitation de la languette 55 constituant les moyens élastiques 17 qui leur sont associés.

Bien entendu, la présente invention ne se limite pas à la forme de réalisation décrite et représentée, mais englobe toute variante d'exécution.

En outre, le domaine d'application de l'invention ne se limite pas non plus au seul cas des blocs autonomes d'éclairage de sécurité à rapporter sur une patère, mais s'étend d'une manière plus générale à tout bloc qui est à rapporter sur un autre.

## Revendications

1. Blocs à rapporter l'un sur l'autre, avec, intervenant entre l'un de ces blocs, dit ici bloc mobile, et l'autre de ceux-ci, dit ici bloc fixe, pour le verrouillage débrayable du bloc mobile sur le bloc fixe, au moins une griffe (16) comportant des moyens de pivotement pour son montage pivotant sur l'un des blocs, entre deux positions, l'une de verrouillage, pour laquelle elle solidarise de manière débrayable le bloc mobile (10) au bloc fixe (11), L'autre de libération, pour laquelle elle libère au contraire ce bloc mobile (10), la griffe (16) comportant, par réalisation d'un seul tenant, des moyens élastiques (17) qui la sollicitent en permanence en direction d'une position de repos constituant sa position de verrouillage, caractérisés en ce que la griffe (16) est montée sur le bloc mobile (10) et en ce que les moyens de pivotement (28) forment sur ladite griffe une partie distincte des moyens élastiques (17).

2. Blocs suivant la revendication 1, caractérisés en ce que le bloc mobile (10) comporte une poche (20), qui est formée par deux parois (15, 21) parallèles, et dans laquelle est engagée la griffe (16), l'une desdites parois (15) formant une surface d'appui pour les moyens élastiques (17) associés à la griffe (16) tandis que l'autre (21) forme une surface de butée définissant sa position de repos.

3. Blocs suivant l'une quelconque des revendications 1, 2, caractérisés en ce que, pour son montage rotatif, la griffe (16) présente en saillie latéralement des tourillons (28).

4. Blocs suivant la revendication 3, caractérisés en ce que, par ses tourillons (28), la griffe (16) est en appui sur la tranche (29) de flasques (25) délimitant latéralement la poche (20) dans laquelle elle est disposée.

5. Blocs suivant l'une quelconque des revendications 1 à 3, caractérisés en ce que les moyens élastiques (17) associés à la griffe (16) sont formés par une languette (55) qui est d'un seul tenant avec elle.

6. Blocs suivant la revendication 5, caractérisés en ce que, la griffe (16) présentant un corps central (27) par lequel, en position de repos, elle porte sur la surface de butée définissant cette position de repos, la languette (55) constituant les moyens élastiques (17) qui lui sont associés forme un U avec ce corps central (27).

7. Blocs suivant l'une quelconque des revendications 1 à 6, caractérisés en ce que le bloc mobile (10) présente transversalement un épaulement (23), et la griffe (16) présente elle-même transversalement un premier cran (30) par lequel elle est apte à coopérer en retenue avec cet épaulement (23).

8. Blocs suivant les revendications 3 et 7, prises conjointement, caractérisés en ce que le premier cran (30) de la griffe (16) est au voisinage de ses tourillons (28).

9. Blocs suivant l'une quelconque des revendications 1 à 8, caractérisés en ce que le bloc fixe (11) présente, transversalement, un épaulement (33), et la griffe (16) présente, elle-même, transversalement, un deuxième cran (34) par lequel elle apte à coopérer en retenue avec cet épaulement (33).

10. Blocs suivant la revendication 9, caractérisés en ce que le deuxième cran (34) de la griffe (16) est formé sur un bras de verrouillage (35) qui fait saillie transversalement sur celle-ci.

11. Blocs suivant l'une quelconque des revendications 1 à 7, caractérisés en ce que la griffe (16) présente transversalement en saillie un bras de déverrouillage (43) accessible de l'extérieur du bloc mobile (10) à la faveur d'un évidement (44) de celui-ci.

12. Blocs suivant la revendication 11, caractérisés en ce que le bras de déverrouillage (43) de la griffe (16) fait saillie à l'extérieur du bloc mobile (10) à la faveur de l'évidement (44) de celui-ci.

13. Blocs suivant les revendications 10 et 11, caractérisés en ce que le bras de verrouillage (35) de la griffe (16) et son bras de déverrouillage (43) s'étendent dos à dos de part et d'autre de la griffe (16), et ils sont sensiblement alignés l'un avec l'autre.

14. Blocs suivant l'une quelconque des revendications 1 à 13, caractérisés en ce que, pour sa retenue en position de libération, la griffe (16) présente un talon d'appui (46) apte à coopérer en appui avec un épaulement d'appui (47) prévu à cet effet sur le bloc fixe (11).

15. Blocs suivant la revendication 14, caractérisés en ce que le talon d'appui (46) de la griffe (16) est formé en bout d'un jambage (48) élastiquement déformable.

16. Blocs suivant la revendication 15, caractérisés en ce que le talon d'appui (46) de la griffe (16) forme la surface inférieure d'un pied (51), qui est en saillie sur le jambage (48), et par lequel ce jambage (48) peut se crocheter sur un épaulement de retenue (52) du bloc fixe (11).

17. Blocs suivant l'une quelconque des revendications 1 à 16, caractérisés en ce que, le bloc mobile (10) et le bloc fixe (11) confinant l'un avec l'autre une zone étanche (18), la griffe (16) s'étend à l'extérieur de celle-ci.

18. Blocs suivant l'une quelconque des revendications 1 à 17, caractérisés en ce que la griffe (16) forme une pièce qui, distincte du bloc mobile (10) qu'elle équipe, est dûment rapportée sur celui-ci.

19. Blocs suivant l'une quelconque des revendications 1 à 18, caractérisés en ce que le bloc mobile (10) porte deux griffes (16).

20. Blocs suivant la revendication 19, caractérisés en ce que les deux griffes (16) sont en positions diagonalement opposées l'une par rapport à l'autre.

## Patentansprüche

1. Aneinander befestigbare Blöcke, wobei zwischen einem dieser Blöcke, beweglicher Block genannt, und dem anderen von ihnen, feststehender Block genannt, für die auskuppelbare Verriegelung des beweglichen Blocks an dem feststehenden Block mindestens ein Greifer (16) vorgesehen ist, der Schwenkmittel für seine zwischen zwei Stellungen schwenkbare Montage an einem der Blöcke aufweist, und zwar zwischen einer Verriegelungsstellung, in der er den beweglichen Block (10) an dem feststehenden Block (11) auskuppelbar befestigt, und einer Freigabestellung, in der er dagegen diesen beweglichen Block (10) freigibt, wobei der Greifer (16) durch einstückige Ausführung elastische Mittel (17) aufweist, die ihn ständig in Richtung einer seine Verriegelungsstellung bildenden Ruhestellung drängen, dadurch gekennzeichnet, dass der Greifer (16) an dem beweglichen Block (10) montiert ist und dass die Schwenkmittel (28) an dem Greifer ein von den elastischen Mitteln (17) verschiedenes Teil bilden.

2. Blöcke nach Anspruch 1, dadurch gekennzeichnet, dass der bewegliche Block (10) eine Tasche (20) besitzt, die von zwei parallelen Wänden (15, 21) gebildet ist und in die der Greifer (16) eingeführt ist, wobei eine (15) dieser Wände eine Auflagefläche für die dem Greifer (16) zugeordneten elastischen Mittel (17) bildet, während die andere (21) eine seine Ruhestellung definierende Anschlagsfläche bildet.

3. Blöcke nach einem der Ansprüche 1, 2, dadurch gekennzeichnet, dass der Greifer (16) für seine drehbare Montage seitlich vorstehend Drehzapfen (28) aufweist.

4. Blöcke nach Anspruch 3, dadurch gekennzeichnet, dass der Greifer (16) mit seinen Drehzapfen (28) an der Schmalkante (29) von Wangen (25) in Anlage ist, die die Tasche (20), in der er angeordnet ist, seitlich abgrenzen.

5. Blöcke nach einem der Ansprüche 1 bis 3, dadurch gekennzeichnet, dass die dem Greifer (16) zugeordneten elastischen Mittel (17) von einer mit ihm einstückig ausgeführten Zunge (55) gebildet sind.

6. Blöcke nach Anspruch 5, dadurch gekennzeichnet, dass der Greifer (16) einen zentralen Körper (27) aufweist, mit dem er in Ruhestellung auf der diese Ruhestellung definierenden Anschlagsfläche aufliegt, und die Zunge (55), die die ihm zugeordneten elastischen Mittel (17) bildet, mit diesem zentralen Körper (27) ein "U" bildet.

7. Blöcke nach einem der Ansprüche 1 bis 6, dadurch gekennzeichnet, dass der bewegliche Block (10) in Querrichtung eine Schulter (23) aufweist, und der Greifer (16) selbst in Querrichtung eine erste Raststufe (30) aufweist, mit der er mit dieser Schulter (23) zurückhaltend zusammenwirken kann.

8. Blöcke nach den Ansprüche 3 und 7 zusammen, dadurch gekennzeichnet, dass die erste Raststufe (30) des Greifers (16) sich in Nähe seiner Drehzapfen (28) befindet.

9. Blöcke nach einem der Ansprüche 1 bis 8, dadurch gekennzeichnet, dass der feststehende Block (11) in Querrichtung eine Schulter (33) aufweist, und der Greifer (16) selbst in Querrichtung eine zweite Raststufe (34) aufweist, mit der er mit dieser Schulter (33) zurückhaltend zusammenwirken kann.

10. Blöcke nach Anspruch 9, dadurch gekennzeichnet, dass die zweite Raststufe (34) des Greifers (16) auf einem Verriegelungsarm (35) gebildet ist, der an diesem in Querrichtung vorsteht.

11. Blöcke nach einem der Ansprüche 1 bis 7, dadurch gekennzeichnet, dass der Greifer (16) in Querrichtung vorstehend einen Entriegelungsarm (43) aufweist, der mittels einer Aussparung (44) des beweglichen Blocks (10) außen an diesem zugänglich ist.

12. Blöcke nach Anspruch 11, dadurch gekennzeichnet, dass der Entriegelungsarm (43) des Greifers (16) über die Aussparung (44) des beweglichen Blocks (10) an diesem außen vorsteht.

13. Blöcke nach den Ansprüchen 10 und 11, dadurch gekennzeichnet, dass der Verriegelungsarm (35) des Greifers (16) und sein Entriegelungsarm (43) sich Rücken an Rücken zu beiden Seiten des Greifers (16) erstrecken und im wesentlichen in einer Linie liegen.

14. Blöcke nach einem der Ansprüche 1 bis 13, dadurch gekennzeichnet, dass der Greifer (16) für seine Zurückhaltung in Freigabestellung eine Stützferse (46) aufweist, die durch Abstützung mit einer Abstützschulter (47) zusammenwirken kann, die zu diesem Zweck auf dem feststehenden Block (11) vorgesehen ist.

15. Blöcke nach Anspruch 14, dadurch gekennzeichnet, dass die Stützferse (46) des Greifers (16) am Ende eines elastisch verformbaren Schenkels (48) gebildet ist.

16. Blöcke nach Anspruch 15, dadurch gekennzeichnet, dass die Stützferse (46) des Greifers (16) die Unterseite eines Fußes (51) bildet, der an dem Schenkel (48) vorsteht und mit dem dieser Schenkel (48) an einer Rückhalteschulter (52) des feststehenden Blocks (11) einhaken kann.

17. Blöcke nach einem der Ansprüche 1 bis 16, dadurch gekennzeichnet, dass der bewegliche Block (10) und der feststehende Block (11) miteinander eine dichte Zone (18) umschließen und dass der Greifer (16) sich außerhalb von dieser erstreckt.

18. Blöcke nach einem der Ansprüche 1 bis 17, dadurch gekennzeichnet, dass der Greifer (16) ein Teil bildet, das von dem beweglichen Block (10), der mit ihm bestückt ist, getrennt ist und an diesem in geeigneter Weise angebracht ist.

19. Blöcke nach einem der Ansprüche 1 bis 18, dadurch gekennzeichnet, dass der bewegliche Block (10) zwei Greifer (16) trägt.

20. Blöcke nach Anspruch 19, dadurch gekennzeichnet, dass die beiden Greifer (16) sich in einander diagonal entgegengesetzten Stellungen befinden.

## Claims

1. Blocks which are to be fitted one upon the other with, operatively disposed between one of said blocks, referred to herein as the movable block, and the other of said blocks, referred to herein as the fixed block, for disengageable locking of the movable block on the fixed block, at least one claw (16) comprising pivoting means for pivotal mounting thereof on one of the blocks, between two positions, one being a locking position in which it disengageably secures the movable block (10) to the fixed block (11) and the other being a liberation position in which in contrast it liberates said movable block (10), the claw (16) comprising by being made in one piece resilient means (17) which urge it continuously in the direction of a rest position constituting its locking position, characterised in that the claw (16) is mounted on the movable block (10) and that the pivoting means (28) form on said claw a portion which is distinct from the resilient means (17).

2. Blocks according to claim 1 characterised in that the movable block (10) comprises a pocket (20) which is formed by two parallel walls (15, 21) and into which the claw (16) is engaged, one of said walls (15) forming a support surface for the resilient means (17) associated with the claw (16) while the other (21) forms an abutment surface defining its rest position.

3. Blocks according to either one of claims 1 and 2 characterised in that, for rotatable mounting thereof, the claw (16) has trunnions (28) in laterally projecting relationship.

4. Blocks according to claim 3 characterised in that, by means of its trunnions (28), the claw (16) bears against the edge (29) of side plate portions (25) laterally delimiting the pocket (20) in which it is disposed.

5. Blocks according to any one of claims 1 to 3 characterised in that the resilient means (17) associated with the claw (16) are formed by a tongue portion (55) which is in one piece with it.

6. Blocks according to claim 5 characterised in that, the claw (16) having a central body (27) by means of which in the rest position it bears against the abutment surface defining said rest position, the tongue portion (55) constituting the resilient means (17) which are associated therewith forms a U-shape with said central body (27).

7. Blocks according to any one of claims 1 to 6 characterised in that the movable block (10) transversely has a shoulder (23) and the claw (16) itself transversely has a first catch (30) by means of which it is capable of co-operating in retaining relationship with said shoulder (23).

8. Blocks according to claims 3 and 7 in combination characterised in that the first catch (30) of the claw (16) is in the vicinity of its trunnions (28).

9. Blocks according to any one of claims 1 to 8 characterised in that the fixed block (11) transversely has a shoulder (33) and the claw (16) itself transversely has a second catch (34) by means of which it is capable of co-operating in retaining relationship with said shoulder (33).

10. Blocks according to claim 9 characterised in that the second catch (34) of the claw (16) is formed on a locking arm (35) which projects transversely thereon.

11. Blocks according to any one of claims 1 to 7 characterised in that the claw (16) transversely has in projecting relationship an unlocking arm (43) which is accessible from the exterior of the movable block (10) by way of an opening (44) therein.

12. Blocks according to claim 11 characterised in that the unlocking arm (43) of the claw (16) projects to the exterior of the movable block (10) by way of the opening (44) therein.

13. Blocks according to claims 10 and 11 characterised in that the locking arm (35) of the claw (16) and its unlocking arm (43) extend in back-to-back relationship on respective sides of the claw (16) and they are substantially aligned with each other.

14. Blocks according to any one of claims 1 to 13 characterised in that, for retention thereof in the liberation position, the claw (16) has a support latch (46) capable of bearingly co-operating with a support shoulder (47) provided for that purpose on the fixed block (11).

15. Blocks according to claim 14 characterised in that the support latch (46) of the claw (16) is formed at the end of an elastically deformable leg portion (48).

16. Blocks according to claim 15 characterised in that the support latch (46) of the claw (16) forms the lower surface of a foot (51) which is in projecting relationship on the leg portion (48) and by way of which said leg portion (48) can hook over a retaining shoulder (52) of the fixed block (11).

17. Blocks according to any one of claims 1 to 16 characterised in that, the movable block (10) and the fixed block (11) confining with each other a sealed region (18), the claw (16) extends in the interior thereof.

18. Blocks according to any one of claims 1 to 17 characterised in that the claw (16) forms a portion which, separate from the movable block (10) which it equips, is appropriately fitted thereto.

19. Blocks according to any one of claims 1 to 18 characterised in that the movable block (10) carries two claws (16).

20. Blocks according to claim 19 characterised in that the two claws (16) are in diagonally mutually opposite positions.
